# EUROPÄISCHE PATENTSCHRIFT

(11) **EP 0 544 934 B1**
(45) Veröffentlichungstag und Bekanntmachung des Hinweises auf die Patenterteilung: **02.10.1996**
(21) Anmeldenummer: 91120640.7
(22) Anmeldetag: 30.11.1991
(51) Int. Cl.: C04B 37/00, C04B 37/02, G01L 9/00, C03C 17/25

(54) **Verfahren zum Stabilisieren der Oberflächeneigenschaften von in Vakuum temperaturzubehandelnden Gegenständen**
Method of stabilizing the surface properties of objects to be thermally treated in a vacuum
Méthode pour stabiliser la surface d'objets devant subir un traitement thermique sous vide

(43) Veröffentlichungstag der Anmeldung: 09.06.1993
(73) Patentinhaber: ENDRESS U. HAUSER GMBH U. CO., D-79689 Maulburg (DE)
(72) Erfinder: Hegner, Frank, Dr., W-7850 Lörrach (DE); Drewes, Ulfert, Dipl.-Ing., W-7843 Heitersheim (DE)
(74) Vertreter: Morstadt, Volker, Dipl.-Ing.

(56) Entgegenhaltungen:
- EP-A- 0 445 382
- WO-A-82/04125
- WO-A-90/12299
- US-A- 2 329 632
- US-A- 3 811 918
- PATENT ABSTRACTS OF JAPAN vol. 14, no. 348 (E-957)27. Juli 1990
- MICROELECTRONIC MANUFACTURING AND TESTING Bd. 12, Nr. 5, April 1989, Seiten 8 - 12; S. K. GUPTA: 'Spin-on glass for dielectric planarization'
- PATENT ABSTRACTS OF JAPAN vol. 12, no. 153 (E-607)11. Mai 1988

## Beschreibung

Die Erfindung betrifft ein Verfahren zum Stabilisieren der Oberflächeneigenschaften von Gegenständen, die einem Temperaturprozeß in Vakuum unterzogen werden.

Ein derartiger Prozeßschritt wird z.B. bei der Herstellung von Drucksensoren angewandt. So ist z.B. in der US-A 50 50 034 die Herstellung eines kapazitiven Drucksensors mit einem Grundkörper und einer Membran beschrieben, die unter Bildung einer mindestens am Rand dicht abgeschlossenen Kammer, insb. in einem definierten Abstand parallel zueinander, zusammenzufügen sind, wobei Grundkörper und/oder Membran aus Keramik, Glas oder einem einkristallinen Isoliermaterial bestehen. Dieses Verfahren weist die folgenden Schritte auf: Die Membran wird mit einer als die eine Kondensator-Elektrode dienenden Schicht aus Siliciumkarbid, Niob oder Tantal beschichtet; der Grundkörper wird im Bereich, der später innerhalb der Kammer liegt, mit mindestens einer weiteren als die zweite etc. Kondensator-Elektrode dienenden Schicht aus einem der genannten leitenden Materialien beschichtet; die Kondensator-Elektroden werden durch den Grundkörper hindurch kontaktiert; und Grundkörper und Membran werden mittels eines zugleich als Abstandshalter dienenden ringförmigen Formteils aus Aktivhartlot oder mittels einer für die Einhaltung des Abstandes ausreichenden Menge einer Aktivhartlotpaste in Hochvakuum verlötet.

Derart hergestellte Drucksensoren sind noch äußerst feuchteempfindlich, was insb. die Güte des bzw. der Kondensatoren stark beeinträchtigt. Daraufhin vorgenommene Untersuchungen zeigten, daß diese Feuchte-Empfindlichkeit nicht auf Veränderungen der Elektroden oder des Materials der Dehnmeßstreifen während des Hochvakuum-Verlötens beruht, sondern daß in diesem Verfahrensschritt sich die unbedeckten Oberflächenteile von Grundkörper und Membran dahingehend verändern, daß sie, anstatt sehr gut isolierend zu bleiben, halbleitend und sehr stark feuchteempfindlich werden.

So Zeigte ein kapazitiver Versuchs-Referenzdrucksensor mit einem Meß- und einem Referenz-Kondensator von jeweils 60 pF Nennkapazität bei einer Änderung der relativen Feuchte von 30% auf 85% (jeweils bei einer Temperatur von 20 °C) im Drucknullpunkt eine Meß-Kapazitätsdifferenz von 1,5 pF und eine Tangens-Delta-Differenz von 0,05 und eine Referenz-Kapazität-Differenz von 3 pF bei einer Tangens-Delta-Differenz von 0,1.

Ferner zeigte ein Versuchs-Grundkörper aus Aluminiumoxid-Keramik von 96%iger Reinheit, auf dem zwei konzentrische, den zweiten Elektroden des obigen Meß- und Referenz-Kondensators entsprechende Beläge mit einem Abstand von 1 mm bei einem Durchmesser der inneren Elektrode von 16 mm aufgebracht waren, vor dem Hochvakuum-Verlöten bei trockener Atmosphäre (= 0% relative Feuchte) einen zwischen diesen beiden Elektroden gemessenen Widerstand von 4x10¹³ Ω, dagegen bei 70% relativer Feuchte (wieder bei 20 °C) einen solchen von 1x10¹¹ Ω. Dagegen waren die entsprechenden Werte des Widerstands nach dem Hochvakuum-Verlöten für trockene Atmosphäre 3x10¹³ Ω und für 70% relative Feuchte nur noch 3x10⁸ Ω.

Diese Untersuchungen führten zu der Erkenntnis, daß durch das Verlöten im Hochvakuum die innerhalb der späteren Kammer freiliegenden Oberflächen von Grundkörper und Membran an Sauerstoff- oder Stickstoffatomen verarmen, also diese Oberflächenteile reduziert werden. Dies führt dazu, daß sie z.B. halbleitend werden, was die erwähnte Güteverschlechterung und die Kapazitätsänderungen der Kondensatoren hervorruft.

Allgemein ist somit festzustellen, daß Vakuum-Temperatur-Prozesse die Oberflächeneigenschaften der behandelten Gegenstände nicht unbeeinflußt lassen und sie meist verschlechtern.

Die Erfindung dient der Lösung dieses Problems.

Die Erfindung besteht somit nach Anspruch 1 in einem Verfahren zum Stabilisieren der elektrischen Isolationseigenschaften von Oberflächen von Gegenständen aus Keramik, Glas oder einem einkristallinen Isoliermaterial, die einem Temperaturprozeß, insb. einem Hochtemperaturprozeß, in Vakuum, insb. Hochvakuum, unterzogen werden und auf die davor eine dünne Schicht aus einer Spin-On-Glas-Lösung mit einem Siliciumdioxid-Äquivalent von höchstens 10% durch Schleudern oder Sprühen aufgebracht und getrocknet wird.

Die Erfindung besteht ferner nach Anspruch 2 in einem Verfahren zum Herstellen eines kapazitiven Drucksensors mit einem Grundkörper und einer Membran, die unter Bildung einer mindestens am Rand dicht abgeschlossenen Kammer, insb. in einem definierten Abstand parallel zueinander, zusammenzufügen sind, wobei Grundkörper und/oder Membran aus Keramik, Glas oder einem einkristallinen Isoliermaterial bestehen, mit folgenden Schritten:
- die Membran wird mit einer als die eine Kondensator-Elektrode dienenden Schicht aus Siliciumkarbid, Niob oder Tantal beschichtet,
- der Grundkörper wird im Bereich, der später innerhalb der Kammer liegt, mit mindestens einer weiteren, als die zweite etc. Kondensator-Elektrode dienenden Schicht aus einem der genannten leitenden Materialien beschichtet,
- auf die jeweilige gesamte, mit dieser Beschichtung versehene Oberfläche von Grundkörper und Membran wird eine dünne Schicht aus einer Spin-On-Glas-Lösung mit einem Siliciumdioxid-Äquivalent von höchstens 10% durch Schleudern oder Sprühen aufgebracht und getrocknet,
- die Kondensator-Elektroden werden durch den Grundkörper und gegebenenfalls durch die Membran hindurch kontaktiert, und
- Grundkörper und Membran werden mittels eines zugleich als Abstandshalter dienenden ringförmigen Formteils aus Aktivhartlot oder mittels einer für die Einhaltung des Abstandes ausreichenden Menge einer Aktivhartlotpaste in Hochvakuum verlötet.

Die Erfindung besteht nach Anspruch 3 ferner in einem Verfahren zum Herstellen eines resistiven Drucksensors mit einem Grundkörper und einer Membran, die unter Bildung einer mindestens am Rand dicht abgeschlossenen Kammer, insb. in einem definierten Abstand parallel zueinander, zusammenzufügen sind, wobei Grundkörper und/oder Membran aus Keramik, Glas oder einem einkristallinen Isoliermaterial bestehen, mit folgenden Schritten:
- die Membran wird im Bereich, der später innerhalb der Kammer liegt, mit mindestens einem Dehnmeßstreifen beschichtet
- danach wird auf die jeweilige gesamte mit dieser Beschichtung versehene Oberfläche der Membran und die ihr später gegenüberliegende Oberfläche des Grundkörpers eine dünne Schicht aus einer Spin-On-Glas-Lösung mit einem Siliciumdioxid-Äquivalent von höchstens 10% durch Schleudern oder Sprühen aufgebracht und getrocknet,
- der bzw.die Dehnmeßstreifen werden durch die Membran hindurch kontaktiert,
- Grundkörper und Membran werden mittels eines zugleich als Abstandshalter dienenden ringförmigen Formteils aus Aktivhartlot oder mittels einer für die Einhaltung des Abstandes ausreichenden Menge einer Aktivhartlotpaste in Hochvakuum verlötet.

Nach einer Weiterbildung des Gegenstands der Erfindung nach Anspruch 2 werden die Kondensator-Elektroden vor dem Aufbringen der Spin-On-Glas-Lösung mit einer Schutzschicht bedeckt.

Die bei der Erfindung verwendeten Spin-On-Glas-Lösungen sind bisher nur bei der Herstellung einer speziellen Klasse von Produkten aus ganz anderen Materialien als Keramik, Glas oder einkristallinen, Isoliermaterialen üblich, nämlich in der Halbleitertechnik bei der Herstellung von integrierten Schaltungen, und dort auch für einen anderen Zweck, nämlich die Planarisierung von deren Oberflächen, also für die Einebnung von durch die mehrfachen Verfahrensschritte entstehenden Oberflächenabstufungen, vgl. den Aufsatz von S. K. Gupta "Spin-On Glass for Dielectric Planarization" in der Zeitschrift "Microelectronic Manufacturing and Testing", April 1989.

Überraschenderweise lassen sich die in diesem Aufsatz vorbeschriebenen Spin-On-Glas-Lösungen zur Beseitigung der oben geschilderten Nachteile bei den angegebenen Materialien heranziehen.

Die Erfindung wird nun anhand eines Ausführungsbeispiels unter Bezugnahme auf die Figuren der Zeichnung näher erläutert, in der gleiche Teile mit denselben Bezugszeichen versehen sind.
- Fig. 1: zeigt eine Draufsicht auf einen nach der Erfindung hergestellten kapazitiven Drucksensor,
- Fig. 2: zeigt eine Schnittansicht des Drucksensors von Fig.l entlang der Schnittlinie A-B,
- Fig. 3: zeigt eine der Fig. 2 entsprechende Schnittansicht eines nach der Erfindung hergestellten resistiven Drucksensors,
- Fig. 4: zeigt die Schnittansicht der beiden Teile des Drucksensors von Fig. 2 nach dem Aufbringen der Spin-On-Glas-Lösung, und
- Fig. 5: zeigt eine Schnittansicht der beiden Teile des Drucksensors von Fig. 3 nach dem Aufbringen der Spin-On-Glas-Lösung.

Der Grundgedanke der Erfindung wird nun anhand der Herstellung der in den Figuren gezeigten Drucksensoren erläutert, d.h. es wird auf eine eigene Figur zum Gegenstand des Anspruchs 1 verzichtet, da diese lediglich einen beliebigen Gegenstand mit einer dünnen Schicht darum zeigen würde, was selbstverständlich ist.

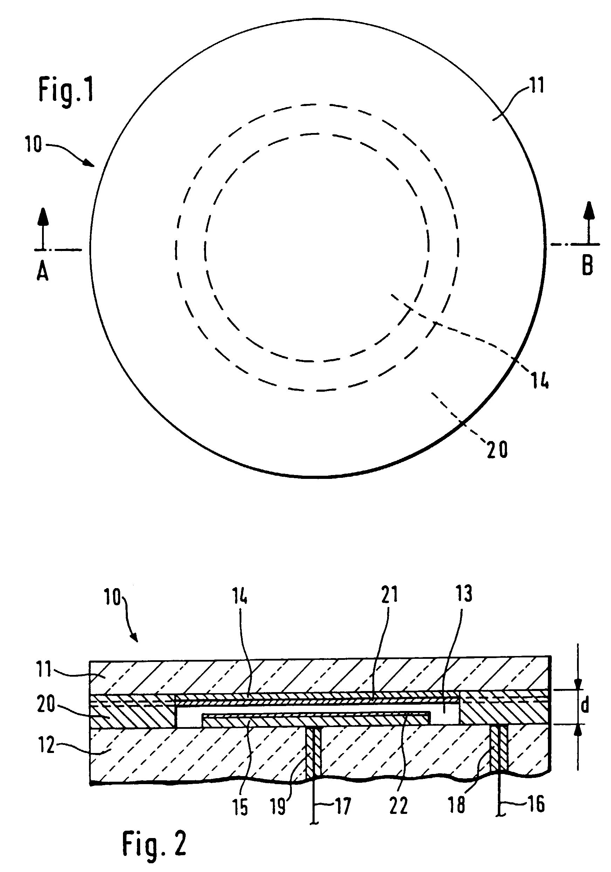

Der in den Fig. 1 und 2 dargestellte kapazitive Drucksensor 10 hat eine Membran 11 in Form einer kreisrunden Scheibe mit planparallelen Flächen, die rings um den Umfang mit einem kreisrunden Grundkörper 12 in einem definierten Abstand d zusammengefügt ist, so daß zwischen der Oberseite des Grundkörpers 12 und der gegenüberliegenden Fläche der Membran 11 eine Kammer 13 gebildet ist.

Die Membran 11 kann aus Keramik, vorzugsweise Aluminiumoxid-Keramik einer Reinheit von 96 Gew%, Glas oder einem einkristallinen Isoliermaterial, wie z.B. Saphir, bestehen. Dabei können die Materialen von Grundkörper 12 und Membran 11 voneinander verschieden sein.

Die Membran 11 ist elastisch, so daß sie sich unter einer darauf einwirkenden Kraft oder einem entsprechenden Druck verformen kann. Der Grundkörper 12 kann massiv und starr sein, was z.B. durch eine gegenüber der Membran größere Dicke erreicht werden kann. Der Grundkörper kann aber auch, falls erwünscht, in gleicher Weise wie die Membran als flache, elastische und somit durchbiegbare Scheibe ausgebildet sein.

An den einander zugewandten Oberflächen von Membran 11 und Grundkörper 12 sind kreisförmige Kondensator-Elektroden 14, 15 aus einem geeigneten Metall, nämlich Niob, Tantal oder leitfähigem Siliciumkarbid, angebracht, die sich innerhalb der Kammer 13 gegenüberliegen. Die Elektrode 14 bedeckt vollständig die Membran 11; sie kann jedoch auch nur im Kammerbereich angebracht sein. Die Elektroden 14, 15 können an ihrer jeweiligen kammerseitigen freien Oberfläche mit einer Schutzschicht 21, 22 bedeckt sein, wie dies in den Fig. 1 und 2 gezeigt ist. Diese Schutzschicht besteht z.B. aus einem der Oxide des Materials, aus dem die Elektroden gebildet sind. Im Falle von Tantal ist das bevorzugt Tantalpentoxid.

Mit der Elektrode 14 ist ein Anschlußleiter 16 und mit der Elektrode 15 ein Anschlußleiter 17 verbunden, die gasdicht durch den Grundkörper hindurch nach außen, also zu seiner Rückseite, geführt sind. Dabei erfolgt die Kontaktierung der Membran-Elektrode 14 über das Aktivhartlot der Fügestelle und den Anschlußleiter 16, was jedoch nicht zwingend ist.

Bedeckt z.B die Membran-Elektrode, wie oben erwähnt, nicht die gesamte Membran-Oberfläche, sondern ist nur im Bereich der Kammer 13 vorgesehen, so ist die Membran-Elektrode durch die Membran 11 hindurch zu deren Rückseite hin in gleicher Weise wie bei der Elektrode des Grundkörpers zu kontaktieren. Hierzu sind der Anschlußleiter 16 wie auch der Anschlußleiter 17 mittels der Aktivhartlot-Einsätze 18, 19 kontaktiert. Anstatt dieser Einsätze können auch aktivhartlot-umhüllte Anschlußleiter verwendet werden.

Ein Aktivhartlot ist ein Hartlot, das mindestens ein stark reaktives Element, wie z.B. Titan, Zirconium, Beryllium, Hafnium oder Tantal enthält. Diese reaktiven Elemente benetzen die Oberfläche der zu verlötenden Teile während des Lötens. Im Falle von (Aluminium-)Oxidkeramik bewirkt die hohe Affinität der reaktiven Elemente zu Sauerstoff eine Reaktion mit der Keramik, was zur Bildung von Mischoxiden und freien chemischen Valenzen führt. Die reaktive Komponente des Hartlots ist in eine Matrix anderer Legierungselemente, wie z.B. Silber/Kupfer, eingebettet, die das eigentliche Hartlotmaterial bilden.

Die beiden Elektroden 14, 15 bilden einen Kondensator, dessen Kapazität von deren Abstand abhängig ist. Wenn sich die Membran 11 unter der Einwirkung einer Kraft oder eines Druckes verformt, ändert sich der Abstand der Elektroden und damit die Kapazität des Drucksensors. Diese Änderung kann mittels einer an die Anschlußleiter 16, 17 anzuschließenden elektronischen Schaltung gemessen werden und daher ein Maß für den bzw. die auf die Membran 11 einwirkenden Druck bzw. einwirkende Kraft sein.

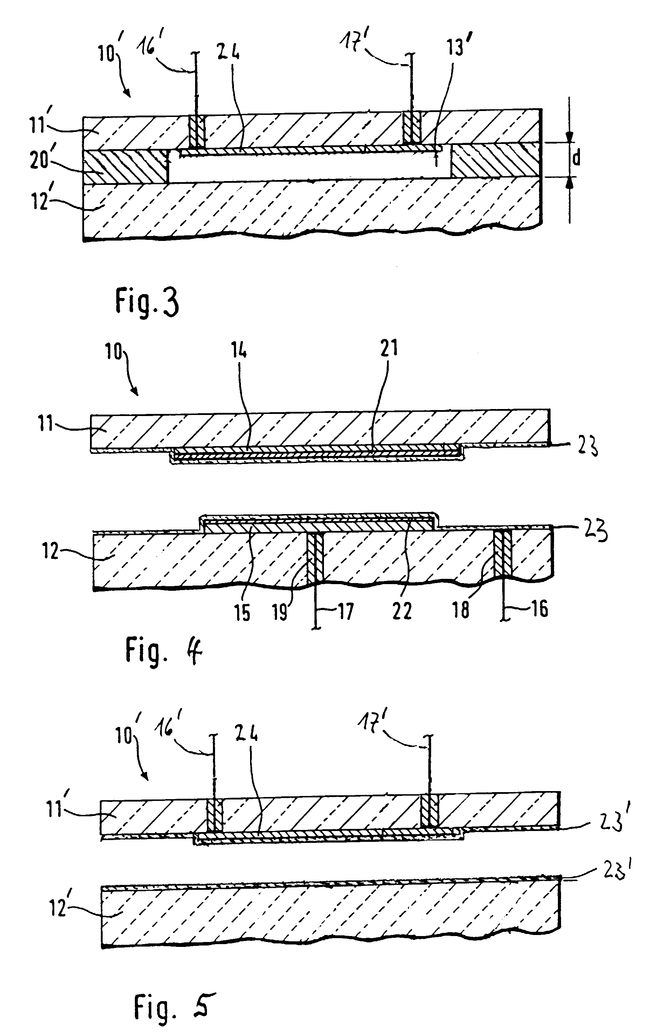

Der in Fig. 3 in Schnittansicht dargestellte resistive Drucksensor 10' hat eine Membran 11' in Form einer kreisrunden Scheibe mit planparallelen Flächen, die rings um den Umfang mit einem kreisrunden Grundkörper 12' in einem definierten Abstand d Zusammengefügt ist, so daß zwischen der Oberseite des Grundkörpers 12' und der gegenüberliegenden Fläche der Membran 11' eine Kammer 13' gebildet ist. Bezüglich der verwendbaren Materialien und der Elastizität von Grundkörper und Membran gilt das oben für den kapazitiven Drucksensor Gesagte in gleicher Weise.

An einer Oberfläche der Membran 11' ist mindestens ein Dehnmeßstreifen 24, z.B. eine Halbbrücke aus zwei oder eine Vollbrücke aus vier Dehnmeßstreifen, angebracht. Der Dehnmeßstreifen 24 ist mit zwei Anschlußleitern 16', 17' verbunden, die gasdicht durch die Membran 11' hindurch nach außen, also zu ihrer Rückseite, geführt sind.

Der ohmsche Widerstand der Dehnmeßstreifen ist von der Durchbiegung der Membran 11' infolge der Einwirkung einer Kraft oder eines Druckes abhängig. Diese Widerstandsänderung kann mittels einer an die Anschlußleiter 16', 17' anzuschließenden elektronischen Schaltung gemessen werden und daher ein Maß für den bzw. die auf die Membran 11' einwirkenden Druck bzw. einwirkende Kraft sein.

Wenn die Kammer 13, 13' evakuiert ist, wird dem kapazitiven bzw. resistiven Drucksensor 10, 10' allein ein äußerer Druck zugeführt. Ist die Kammer nach außen dagegen offen, was z.B. mittels einer Bohrung im Grundkörper 12, 12' erreicht werden kann, so ist der Drucksensor als Referenzdruck-Sensor einsetzbar.

Die entsprechend der Erfindung aufgebrachte Schicht der erwähnten Spin-On-Glas-Lösung, die durch de Hochtemperaturprozeß des Verlötens in eine vernetzte Siliciumdioxidschicht umgewandelt wird, ist am fertig hergestellten Drucksensor und somit in den Fig. 1 bis 3 nicht mehr zu sehen.

Dagegen sind in Fig. 4 Membran 11 und Grundkörper 12 des kapazitiven Drucksensors 10 der Fig. 1 und 2 in einem Verfahrenszustand gezeigt, nachdem eine Spin-On-Glas-Lösung mit höchstens 10% Siliciumdioxid-Äquivalent aufgebracht wurde, was durch Schleudern oder Sprühen geschehen kann und die Spin-On-Glas-Schicht 23 ergibt. Diese ist realiter recht dünn, sie beträgt nämlich nur etwa 200 nm, so daß sie in Fig. 4, um sie überhaupt sichtbar zu machen, nicht maßstäblich dargestellt ist.

In gleicher Weise zeigt schließlich Fig. 5 die Membran 11' und den Grundkörper 12' des resistiven Drucksensors 10' von Fig. 3 wiederum in demjenigen Verfahrenszustand, nachdem eine Spin-On-Glas-Lösung mit höchstens 10% Siliciumdioxid-Äquivalent durch Schleudern oder Sprühen aufgebracht wurde, was die Spin-On-Glas-Schicht 23' ergibt. Diese ist wiederum nur etwa 200 nm dick, so daß sie auch in Fig. 5 nicht maßstäblich dargestellt ist.

Die Verlötung von Membran 11, 11' und Grundkörper 12, 12' erfolgt in Hochvakuum von mindestens 10⁻⁵ hPa (= mbar), besser im Bereich von 10⁻⁶ hPa (= mbar). Sehr gutes Vakuum ist erforderlich, um Reaktionen des reaktiven Hartlotpartners, insb. des Titans, mit dem Restgas zu vermeiden und ein gute Benetzung zu erreichen. Die Löttemperatur liegt zweckmäßigerweise 30 °C bis 100 °C über der Liquidustemperatur, damit eine optimale Reaktion und eine hohe Festigkeit sowie Gasdichtheit der Fügestelle erhalten werden.

Die Spin-On-Glas-Schicht 23, 23' versiegelt die nichtbedeckten Oberflächenteile von Membran 11, 11' und Grundkörper 12, 12' überraschenderweise derart perfekt, daß während des Verlötens die erwähnte Reduzierung praktisch nicht mehr auftritt.

Dies zeigen die im folgenden angegebenen Meßergebnisse an einem entsprechend der Erfindung hergestellten kapazitiven Referenzdrucksensor, der die gleichen Abmessungen wie der eingangs erwähnte Referenzdrucksensor hatte und wobei die gleichen Meßbedingungen (Temperatur 20 °C, im Drucknullpunkt) vorlagen.

Zunächst wurde wieder wie oben nur ein Grundkörper 12 untersucht und mit der Spin-On-Glas-Lösung beschichtet. Nach Trocknung und Erhitzung auf 400 °C ergaben sich für 0% relative Feuchte ein Widerstand von 1x10¹³ Ω und für 70% relative Feuchte 1x10¹⁰ Ω. Das ist bereits eine wesentliche Verbesserung gegenüber den obigen Meßwerten bei nichtbeschichtetem Grundkörper.

Wurde der beschichtete Grundkörper auf etwa 900 °C erhitzt, welche Temperatur dem Löttemperaturbereich des Drucksensors entspricht, so ergab sich für 70% relative Feuchte ein Widerstand von 5x10¹² Ω bei gleichem Ausgangswert für 0% relative Feuchte.

Diese erhebliche Verbesserung des Widerstands wirkt sich auch auf die Kennwerte eines kapazitiven Drucksensors aus: Zwischen 30% und 85% relative Feuchte betrug die Differenz der Meß-Kapazität nur noch 0,2 pF bei einer Tangens-Delta-Differenz von 0,005 und die der Referenz-Kapazität 0,4 pF bei einer Tangens-Delta-Differenz von 0,01.

Im Falle der erläuterten Drucksensoren ist bei der Auswahl der Zusammensetzung der Spin-On-Glas-Lösung anhand von Herstellerangeben darauf zu achten, daß nach dem Verlöten im vernetzten Siliciumdioxid keine Kohlenwasserstoff-Bindungen, wie z.B. in Siloxanen vorhanden, auftreten, also ein reines Silikat, Phosphosilikat oder dergleichen vorliegt, da sonst die Feuchte-Empfindlichkeit nicht ausreichend reduziert wird.

## Patentansprüche

1. Verfahren zum Stabilisieren der elektrischen Isolationseigenschaften von Oberflächen von Gegenständen aus Keramik, Glas oder einem einkristallinen Isoliermaterial, die einem Temperaturprozeß, insb. einem Hochtemperaturprozeß, in Vakuum, insb. Hochvakuum, unterzogen werden und auf die davor eine dünne Schicht aus einer Spin-On-Glas-Lösung mit einem Siliciumdioxid-Äquivalent von höchstens 10% durch Schleudern oder Sprühen aufgebracht und getrocknet wird.

2. Verfahren zum Herstellen eines kapazitiven Drucksensors (10) mit einem Grundkörper (12) und einer Membran (11) , die unter Bildung einer mindestens am Rand dicht abgeschlossenen Kammer (13), insb. in einem definierten Abstand (d) parallel zueinander, zusammenzufügen sind, wobei Grundkörper und/oder Membran aus Keramik, Glas oder einem einkristallinen Isoliermaterial bestehen, mit folgenden Schritten:
- die Membran (11) wird mit einer als die eine Kondensator-Elektrode (14) dienenden Schicht aus Siliciumkarbid, Niob oder Tantal beschichtet,
- der Grundkörper (12) wird im Bereich, der später innerhalb der Kammer (13) liegt, mit mindestens einer weiteren, als die zweite, dritte. Kondensator-Elektrode (15) dienenden Schicht aus einem der genannten leitenden Materialien beschichtet,
- auf die jeweilige gesamte, mit dieser Beschichtung versehene Oberfläche von Membran (11) und Grundkörper (12) wird eine dünne Schicht (23) aus einer Spin-On-Glas-Lösung mit einem Siliciumdioxid-Äquivalent von höchstens 10% durch Schleudern oder Sprühen aufgebracht und getrocknet,
- die Kondensator-Elektroden (14, 15) werden durch den Grundkörper (12) und gegebenenfalls durch die Membran (11) hindurch kontaktiert, und
- Grundkörper und Membran werden mittels eines zugleich als Abstandshalter dienenden ringförmigen Formteils (20) aus Aktivhartlot oder mittels einer für die Einhaltung des Abstandes (d) ausreichenden Menge einer Aktivhartlotpaste in Hochvakuum verlötet.

3. Verfahren zum Herstellen eines resistiven Drucksensors (10') mit einem Grundkörper (12') und einer Membran (11'), die unter Bildung einer mindestens am Rand dicht abgeschlossenen Kammer (13'), insb. in einem definierten Abstand (d) parallel zueinander, zusammenzufügen sind, wobei Grundkörper und/oder Membran aus Keramik, Glas oder einem einkristallinen Isoliermaterial bestehen, mit folgenden Schritten:
- die Membran (11') wird im Bereich, der später innerhalb der Kammer (13') liegt, mit mindestens einem Dehnmeßstreifen (24) beschichtet,
- auf die jeweilige gesamte mit dieser Beschichtung versehene Oberfläche der Membran (11') und die ihr später gegenüberliegende Oberfläche des Grundkörpers (12') wird eine dünne Schicht (23') aus einer Spin-On-Glas-Losung mit einem Siliciumdioxid-Äquivalent von höchstens 10% durch Schleudern oder Sprühen aufgebracht und getrocknet,
- der bzw. die Dehnmeßstreifen (24) werden durch die Membran hindurch kontaktiert, und
- Grundkörper und Membran werden mittels eines zugleich als Abstandshalter dienenden ringförmigen Formteils (20') aus Aktivhartlot oder mittels einer für die Einhaltung des Abstandes (d) ausreichenden Menge einer Aktivhartlotpaste in Hochvakuum verlötet.

4. Verfahren nach Anspruch 2, bei dem die Kondensator-Elektroden (14, 15) vor dem Aufbringen der Spin-On-Glas-Lösung mit einer Schutzschicht (21) bedeckt werden.

## Claims

1. A method of stabilizing the electrical insulating properties of surfaces of objects made of ceramic, glass, or a single-crystal insulating material which are subjected to a temperature process, particularly a high-temperature process, in a vacuum, particularly a high vacuum, and to which before that a thin layer of a spin-on glass solution with a silicon-dioxide equivalent of not more than 10% is applied by spinning or spraying, and dried.

2. A method of manufacturing a capacitive pressure sensor (10) having a substrate (12) and a diaphragm (11) to be joined together, particularly at a defined distance (d) from and parallel to each other, forming a chamber (13) sealed at least at the edge, the substrate and/or the diaphragm being made of ceramic, glass, or a single-crystal insulating material, said method comprising the following steps:
- The diaphragm (11) is coated with a layer of silicon carbide, niobium, or tantalum serving as one capacitor electrode (14);
- the surface portion of the substrate (12) which will lie within the chamber (13) is coated with at least one additional layer of any of said conducting materials serving as the second, third capacitor electrode (15);
- over the entire surface of the substrate (12) thus coated and over the entire surface of the diaphragm (11) thus coated, a thin layer (23) of a spin-on glass solution with a silicon-dioxide equivalent of not more than 10% is applied by spinning or spraying, and dried;
- contact is made to the capacitor electrodes (14, 15) through the substrate (12) and, if necessary, through the diaphragm (11); and
- substrate and diaphragm are high-vacuum-brazed together by means of a ring-shaped part (20) of active brazing solder, which also serves as a spacer, or by means of an amount of active brazing paste sufficient for holding the two parts at the defined distance (d) from each other.

3. A method of manufacturing a resistive pressure sensor (10') having a substrate (12') and a diaphragm (11') to be joined together, particularly at a defined distance (d) from and parallel to each other, forming a chamber (13') sealed at least at the edge, the substrate and/or the diaphragm being made of ceramic, glass or a single-crystal insulating material, said method comprising the following steps:
- The surface portion of the diaphragm (11') which will lie within the chamber (13') is provided with at least one strain gage (24);
- over the entire surface of the diaphragm (11') a portion of which has been provided with the at least one strain gage, and over the entire surface of the substrate (12') which will lie opposite said surface of the diaphragm (11'), a thin layer (23') of a spin-on glass solution with a silicon-dioxide equivalent of not more than 10% is applied by spinning or spraying, and dried;
- contact is made to the at least one strain gage (24) through the diaphragm; and
- substrate and diaphragm are high-vacuum-brazed together by means of a ring-shaped part (20') of active brazing solder, which also serves as a spacer, or by means of an amount of active brazing paste sufficient for holding the two parts at the defined distance (d) from each other.

4. A method as claimed in claim 2 wherein prior to the application of the spin-on glass solution, the capacitor electrodes (14, 15) are covered with a protective layer (21).

## Revendications

1. Procédé pour stabiliser les propriétés d'isolation électrique de surfaces d'objets en céramique, en verre ou dans un matériau isolant monocristallin, qui sont soumis à un traitement thermique, notamment à haute température, sous vide, notamment sous vide poussé, et sur lesquels est appliquée, préalablement, par centrifugation ou pulvérisation, une mince couche d'une solution de verre d'enduction (spin-on) comprenant au maximum 10 % d'un équivalent de dioxyde de silicium, et est séchée.

2. Procédé pour fabriquer un capteur de pression capacitif (10) ayant un corps de base (12) et une membrane (11) qui, par la formation d'une chambre fermée (13) de façon étanche, au moins au niveau du bord, sont à assembler, parallèles l'un à l'autre, notamment suivant un écartement défini (d), où le corps de base et/ou la membrane sont en céramique, en verre ou dans un matériau isolant monocristallin, et où au cours des phases suivantes :
- la membrane (11) est recouverte d'une couche de carbure de silicium, de niobium ou de tantale servant d'électrode (14) de condensateur,
- le corps de base (12), dans la zone se trouvant ultérieurement à l'intérieur de la chambre (13), est recouvert au moins d'une autre couche réalisée dans un desdits matériaux conducteurs et servant de deuxième, de troisième électrodes (15) de condensateur,
- sur la totalité de la surface respective de la membrane (11) et du corps de base (12), dotée de ce revêtement, est appliquée, par centrifugation ou pulvérisation, une mince couche (23) d'une solution de verre d'enduction (spin-on) comprenant au maximum 10 % d'un équivalent de dioxyde de silicium, et est séchée,
- les électrodes (14 et 15) de condensateur sont métallisées à travers le corps de base (12) et éventuellement à travers la membrane (11), et
- le corps de base et la membrane sont brasés à partir d'une brasure active et à l'aide d'une pièce de forme annulaire (20) servant en même temps d'entretoise, ou au moyen d'une quantité suffisante d'une pâte de brasure active, sous vide poussé, pour le maintien de l'écartement (d).

3. Procédé de fabrication d'un capteur de pression résistif (10') ayant un corps de base (12') et une membrane (11') qui, par la formation d'une chambre fermée (13') de façon étanche, au moins au niveau du bord, sont à assembler, parallèles l'un à l'autre, notamment suivant un écartement défini (d), où le corps de base et/ou la membrane sont en céramique, en verre ou dans un matériau isolant monocristallin, et où au cours des phases suivantes :
- la membrane (11'), dans la zone se trouvant ultérieurement à l'intérieur de la chambré (13'), est recouverte au moins d'une jauge de contrainte (24),
- sur la totalité de la surface respective de la membrane (11') et de la surface du corps de base (12') lui faisant face ultérieurement, dotée de ce revêtement, est appliquée, par centrifugation ou pulvérisation, une mince couche (23') d'une solution de verre d'enduction (spin-on) comprenant au maximum 10 % d'un équivalent de dioxyde de silicium, et est séchée,
- la ou les jauges de contrainte (24) étant métallisée(s) à travers la membrane, et
- le corps de base et la membrane sont brasés à partir d'une brasure active et à l'aide d'une pièce de forme annulaire (20') servant en même temps d'entretoise, ou au moyen d'une quantité suffisante d'une pâte de brasure active, sous vide poussé, pour le maintien de l'écartement (d).

4. Procédé selon la revendication 2, dans lequel les électrodes (14 et 15) de condensateur sont recouvertes d'une couche de protection (21) avant l'application de la solution de verre d'enduction (spin-on).
